Europäisches Patentamt

European Patent Office

Office européen des brevets

(11) Publication number: **0 076 540**
**B1**

(12) **EUROPEAN PATENT SPECIFICATION**

(45) Date of publication of patent specification: **19.02.86**

(21) Application number: **82201189.6**

(22) Date of filing: **23.09.82**

(51) Int. Cl.⁴: **F 16 L 11/11,** F 16 L 11/08

(54) **Flexible hose for liquefied gases.** .

(30) Priority: **02.10.81 GB 8129791**

(43) Date of publication of application:
**13.04.83 Bulletin 83/15**

(45) Publication of the grant of the patent:
**19.02.86 Bulletin 86/08**

(84) Designated Contracting States:
**DE FR IT NL**

(56) References cited:
**AT-B- 327 631**
**DE-A-2 431 277**
**GB-A-1 444 560**
**US-A-2 943 644**

(73) Proprietor: **SHELL RESEARCH LIMITED**
**Shell Centre**
**London SE1 7NA (GB)**

(72) Inventor: **Mead, Howard Brian**
**2 Redhill Road Kelsall**
**Tarporley Cheshire CW6 0QP (GB)**

(74) Representative: **Aalbers, Onno et al**
**P.O. Box 302**
**NL-2501 CH The Hague (NL)**

Courier Press, Leamington Spa, England.

## Description

The invention relates to a flexible hose in particular for liquefied gases, such as liquefied natural gas or liquid propane, comprising a plurality of coaxial primary tubular bodies arranged between an inner helically wound wire and an outer helically wound wire, wherein adjacent primary tubular bodies are separated from each other by a secondary tubular body, and wherein the wires are wound at the same pitch but having the windings displaced by half a pitch width from each other.

Known from AT—B—327 631 is a flexible hose of the above kind for conveying chemical substances, wherein the primary and secondary tubular bodies may comprise layers polypropylene cloth and polypropylene film respectively.

When such a hose is used for example in loading and/or off-loading liquefied gas tankers, it is required that the primary tubular body must maintain its flexibility and strength at cryogenic conditions and it must form a liquid and gas-tight sealing, because the hose is subject to cryogenic conditions and, in addition, to continuous flexure owing to the ship movement. Moreover, in a floating configuration of the hose such a hose is furthermore subject to wave motions. The fatigue resistance of the hose to flexure has a clear bearing on the down-time and replacement costs attributable to a failed hose.

The object of the present invention is to improve the above-mentioned known type of flexible hose by providing a flexible hose for liquefied gases having an improved fatigue resistance so that the life of the hose is considerably prolonged relative to the life of the known hose.

To this end the flexible hose according to the invention is characterized in that the primary tubular bodies comprise biaxially oriented polypropylene film, and that the secondary tubular body comprises higher strength material to improve the axial strength of the hose.

Tensile tests at a temperature of minus 196°C have indicated that the tensile properties, such as ultimate tensile strength and breaking strain, of polypropylene film are inferior to the tensile properties of biaxially oriented polypropylene film. Although little is known about the growth of fatigue cracks in the primary tubular body of a flexible hose, it is believed that the large breaking strain of biaxially oriented polypropylene at cryogenic conditions accounts for the large fatigue resistance of the flexible hose according to the invention.

It is observed that known in the art is a hose for liquefied gases wherein the primary and secondary tubular bodies comprise layers of polyethylene terephthalate film and polyethylene terephthalate cloth respectively. It has been found, however, that the application of biaxially oriented polypropylene film instead of polyethylene terephthalate film in the hose for liquefied gases improves the fatigue-resistance considerably, and since biaxially oriented polypropylene film remains flexible at cryogenic temperatures and is impermeable to liquids and gases the above-mentioned requirements are satisfied as well.

Tests have been carried out with a 250 mm bore hose according to the invention. When filled with liquid nitrogen having a boiling point of minus 196°C and flexed in a vertical test tower, the hose according to the invention withstood about 10 times more cycles without failure than a 250 mm bore hose having a tubular body of polyethylene terephthalate film.

In a suitable embodiment of the invention the high strength material consists of polyethylene terephthalate cloth.

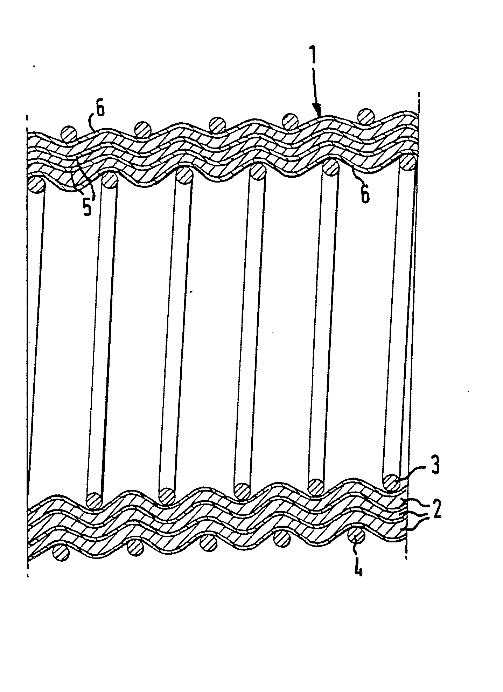

The invention will now be described in more detail with reference to the drawing showing a longitudinal cross section of a flexible hose for liquefied gases according to the invention. Reference numeral 1 indicates a flexible hose for liquefied gases. The hose 1 comprises a plurality of coaxial primary tubular bodies 2 of biaxially oriented polypropylene film arranged between an inner helically wound wire 3 and an outer helically wound wire 4. The windings of the outer wire 4 are displaced by half a pitch width from the windings of the inner wire 3 so that the convolutions of the outer helically wound wire 4 lie within the grooves of the inner helically wound wire 3. These convolutions together with the flexible nature of the tubular bodies 2 of biaxially oriented polypropylene film give the hose 1 its required flexibility. Between each pair of adjacent primary tubular bodies 2 of biaxially oriented polypropylene film a secondary tubular body 5 of flexible material is arranged which material has a high axial strength and is resistant to cryogenic temperatures. An example of such a material is polyethylene terephthalate cloth. The application of such strength improving secondary tubular bodies 5 in addition to the primary tubular bodies 2 of biaxially oriented polypropylene film makes the hose in particular suitable for high duty operations wherein the hose must withstand high axial stresses.

To avoid wear of the innermost and the outermost primary tubular bodies 2 due to friction of the inner wire 3 and the outer wire 4 respectively over said primary tubular bodies 2, a layer 6 of wear resistant material is arranged between the innermost primary tubular body 2 and the inner wire 3 as well as between the outermost primary tubular body 2 and the outer wire 4. A suitable wear-resistant material is for example polyethylene terephthalate cloth. In manufacture the above-mentioned components are built up in succession over a mandrel.

Each of the primary tubular bodies 2 of biaxially oriented polypropylene film may consist of a single tubular layer or a plurality of relatively thin tubular layers of biaxially oriented polypropylene film.

Each tubular layer may be formed by interconnecting opposite sides of a film of biaxially oriented polypropylene or by helically winding a film of biaxially oriented polypropylene around the already formed part of the hose.

Although the hose shown in the drawing comprises three coaxial primary tubular bodies 2 of biaxially oriented polypropylene film, it is also possible to apply another number of coaxial primary tubular bodies or a single primary tubular body of biaxially oriented polypropylene film. To obtain a sufficient flexibility at cryogenic temperatures the application of at least two coaxial primary tubular bodies of biaxially oriented polypropylene film is to be preferred. A plurality of primary tubular bodies of biaxially oriented polypropylene film moreover improves the resistance of the hose against deterioration compared with a single primary tubular body of biaxially oriented polypropylene film.

Instead of the application of the layers 6 the helically wound wires 3 and 4 may be provided with a friction reducing coating to avoid wear of the innermost and the outermost primary tubular body 2.

Finally it is noted that the hose according to the invention may be provided with a body of heat insulating material arranged around the outer helically wound wire. Said body of heat-insulating material may be enveloped by a gas and liquid-tight layer, so that a flexible floating heat-insulated hose is obtained.

## Claims

1. Flexible hose in particular for liquefied gases, comprising a plurality of coaxial primary tubular bodies arranged between an inner helically wound wire and an outer helically wound wire, wherein adjacent primary tubular bodies are separated from each other by a secondary tubular body, and wherein the wires are wound at the same pitch but having the windings displaced by half a pitch width from each other, characterized in that the primary tubular bodies comprise biaxially oriented polypropylene film, and that the secondary tubular body comprises higher strength material to improve the axial strength of the hose.

2. Flexible hose as claimed in claim 1, wherein the high strength material consists of polyethylene terephthalate cloth.

3. Flexible hose as claimed in claim 1 or 2, further comprising two layers of wear-resistant material, one layer being arranged between the (innermost) primary tubular body of biaxially oriented polypropylene film and the inner helically wound wire, and the other layer being arranged between the (outermost) primary tubular body of biaxially oriented polypropylene film and the outer helically wound wire.

4. Flexible hose as claimed in claim 3, wherein the wear-resistant material consists of polyethylene terephthalate cloth.

5. Flexible hose as claimed in any one of the claims 1—4, wherein a layer of heat insulating material is arranged around the outer helically wound wire.

6. Flexible hose as claimed in claim 5, wherein the layer of heat insulating material is enveloped by a gas and liquid-tight layer.

## Revendications

1. Tuyau flexible en particulier pour les gaz liquéfiés, comprenant plusieurs corps tubulaires primaires coaxiaux disposés entre un fil métallique interieur enroulé de façon hélicoïdale et un fil métallique extérieur enroulé de façon hélicoïdale, où les corps tubulaires primaires adjacents sont séparés l'un de l'autre par un corps tubulaire secondaire, et où les fils métalliques sont enroulés au même pas mais en ayant leurs enroulements décalés de la moitié d'une largeur de pas l'un par rapport à l'autre, caractérisé en ce que les corps tubulaires primaires comprennent une pellicule de polypropylène orientée de façon biaxiale, et en ce que le corps tubulaire secondaire comprend une matière de résistance plus élevée pour améliorer la résistance axiale du tuyau.

2. Tuyau flexible selon la revendication 1, où la matière à haute résistance consiste en un tissu de térephthalate de polyéthylène.

3. Tuyau flexible selon la revendication 1 ou 2, comprenant en outre deux couches de matière résistante à l'usure, une couche étant disposée entre le corps tubulaire primaire (le plus intérieur) de pellicule de polypropylène orientée de façon biaxiale et le fil métallique intérieur enroulé de façon hélicoïdale, et l'autre couche étant disposée entre le corps tubulaire primaire (le plus extérieur) de pellicule de polypropylène orientée de façon biaxiale et le fil métallique extérieur enroulé de façon hélicoïdale.

4. Tuyau flexible selon la revendication 3, où la matière résistante à l'usure consiste en un tissu de térephthalate de polyéthylène.

5. Tuyau flexible selon l'une quelconque des revendications 1—4, où l'on dispose une couche de matière isolante thermiquement autour du fil métallique extérieur enroulé de façon hélicoïdale.

6. Tuyau flexible selon la revendication 5, où la couche de matière isolante thermiquement est enveloppée par une couche étanche aux gaz et aux liquides.

## Patentansprüche

1. Biegsamer Schlauch, insbesondere für verflüssigte Gase, aus einer Vielzahl koaxialer primärer Rohrkörper zwischen einem inneren schraubenartig aufgewickelten Draht und einem äußeren schraubenartig aufgewickelten Draht, wobei einander zugekehrte primäre Rohrkörper voneinander getrennt sind durch einen sekundären Rohrkörper und die Drähte mit gleicher Steigung aufgewickelt sind, jedoch die Windungen um die Hälfte einer Steigung versetzt sind, dadurch gekennzeichnet, daß die primären Rohrkörper biaxial orientierte Polypropylenfolien umfassen und der sekundäre Rohrkörper zur Verbesserung der Axialfestigkeit des Schlauchs ein Material höherer Festigkeit enthält.

2. Flexibler Schlauch nach Anspruch 1, worin das Material höherer Festigkeit ein Polyethylenterephthalat-Gewebe ist.

3: Flexibler Schlauch nach Anspruch 1 oder 2, enthaltend zusätzlich zwei Schichten von verschleiß-beständigem Material, wobei eine der Schichten zwischen dem (innersten) primären Rohrkörper der biaxial orientierten Polypropylenfolie und dem inneren schraubenförmig aufgewickelten Draht und die andere Schicht zwischen dem (äußersten) primären Rohrkörper der biaxial orientierten Polypropylenfolie und dem äußeren schraubenförmig aufgewickelten Draht angeordnet ist.

4. Flexibler Schlauch nach Anspruch 3, in dem das gegen Verschleiß beständige Material ein Polyethylenterephthalat-Gewebe ist.

5. Flexibler Schlauch nach einem der Ansprüche 1 bis 4, worin eine Schicht von wärmeisolierendem Material um den äußeren schraubenförmig aufgewickelten Draht angeordnet ist.

6. Flexibler Schlauch nach Anspruch 5, worin die Schicht aus wärmeisolierendem Material von einer gas- und flüssigkeitsdichten Lage umschlossen ist.